# EUROPEAN PATENT APPLICATION

(11) **EP 2 101 244 A1**
(43) Date of publication of application: **16.09.2009**
(21) Application number: 09002824.2
(22) Date of filing: 27.02.2009
(51) Int. Cl.: G06F 1/16

(54) **Separable multimedia apparatus**

(30) Priority: 29.02.2008 TW 97203537 U
(71) Applicant: Giga-Byte Technology Co., Ltd., Taipei (TW)
(72) Inventor: Chiu, Chih Chiang, Taipei County (TW); Kao, Lin Yu, Taipei County (TW); Lin, Kuen Chieh, Taipei County (TW); Huang, Shih Yuan, Taipei County (TW); Chen, Yu Wei, Taipei County (TW)
(74) Representative: Brandenburger, Karin

(57) **Abstract**

A separable multimedia apparatus includes a computer apparatus and an electronic multimedia device. Both can combine to make up a standard system via concrete link interfaces. Moreover, after separating from each other, one is a portable computer and the other is a web TV device. Wherein the multimedia can work independently, and the computer apparatus is easier to carry so as to save more users's cost and increase the effect on convenience.

## Description

### BACKGROUND OF THE INVENTION

### Field of the Invention

The present invention generally relates to an electronic multimedia device, and more particular, a separate-able electronic multimedia apparatus.

### Description of the Related Art

IPTV, the abbreviation of Internet Protocol Television, can provide TV programs to users via wide band network. Compared with conventional TV, IPTV has the features of interaction and instant. For visual (video) signal encoding, IPTV uses the technology of MPEG-4, H.264, and etc. The transmitting speed of visual data reaches 768kb/s, wherein the data capacity and the speed almost equal to DVD level. So as to IPTV is able to supply digital media data with high quality.

However, the conventional IPTV device only works when the personal computer co-operates with it, and it can't work by itself. So, users who want to watch IPTV have to purchase additional personal computer apparatus, which will results in an extra cost to users.

Moreover, the general portable computer apparatus is big and weighty. Though it can connect IPTV via WiFi, it is quiet inconvenient for users.

### SUMMARY OF THE INVENTION

In order to break through conventional technology mentioned above, the present invention provides the separate-able apparatus to solve that the web TV device with conventional technology can't work independently and solve that the computer apparatus connecting to web TV device is not easy to carry.

According to the present invention, the separate-able multimedia apparatus comprises an electronic multimedia device and a computer apparatus. The electronic multimedia device comprises a web TV system, a wireless network system, a first link interface. The computer apparatus comprises a wireless network system and a second link interface. The first link interface on the electronic multimedia device connects with the second link interface on the computer apparatus to process at least one signal transmitting and composed as a bare bone system. And the electronic multimedia device also can connect with the computer apparatus via wireless network system for playing a web TV program using the computer apparatus.

Wherein the computer apparatus further comprises a screen, a control interface, at least a webcam and a GPS. The electronic multimedia device further comprises a CD-ROM driver and a transmitting-interface. The transmitting-interface transmits signals to at least an external apparatus mutually.

To sum up, according to the separate-able multimedia apparatus of the present invention, the computer apparatus combines with the electronic multimedia device to make up a standard system via the concrete link interfaces. When they separate from each other, one is an independent portable computer and the other is a web TV device. Wherein the electronic multimedia device can work independently and the computer apparatus is easier to carry, so as to save more users' cost and increase the effect on convenience.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a plan schematic view of a separate-able multimedia apparatus in accordance with an embodiment of the present invention;
FIG. 2 is a plan schematic view of an electronic multimedia device in accordance with an embodiment of the present invention;
FIG. 3 is a plan schematic view of a transmitting-interface on the electronic multimedia device in accordance with the present invention;
FIG. 4 is a plan schematic view of a computer apparatus in accordance with an embodiment of the present invention; and
FIG. 5 is a plan schematic view for divisions of a separate-able multimedia apparatus in accordance with the present invention.

### DETAILED DESCRIPTION OF THE INVENTION

The present invention will now be described in detail with reference to the accompanying drawings, wherein the same reference numerals will be used to identify the same or similar elements throughout the several views. It should be noted that the drawings should be viewed in the direction of orientation of the reference numerals.

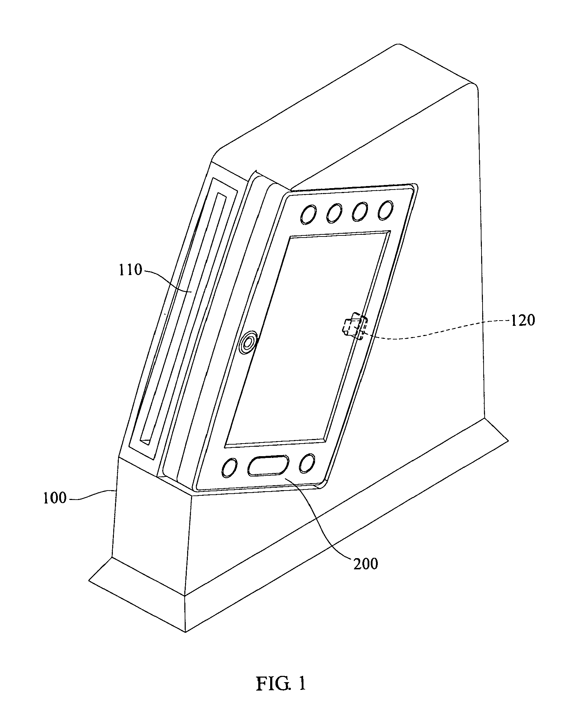

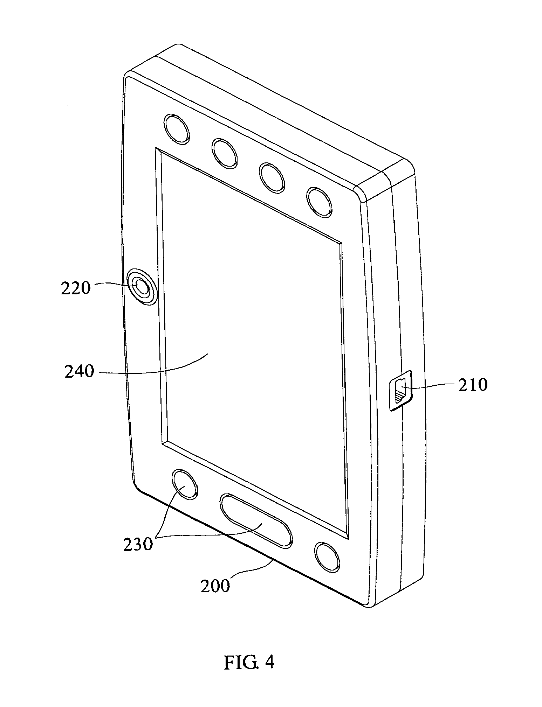

Referring to FIG. 1 and FIG. 4, are plan schematic views for a separate-able multimedia apparatus and a computer apparatus in accordance with an embodiment of the present invention. Referring to FIG. 1, a separate-able multimedia apparatus comprises a computer apparatus 200 and an electronic multimedia device 100.

The electronic multimedia device 100 comprises a web TV system (not indicated in the FIG.), a wireless network system (not indicated in the FIG.), and a first link interface 120. The computer apparatus 200 comprises a second link interface 210 and a wireless network system (not indicated in the FIG.) .

The first link interface 120 on the electronic multimedia device 100 can connect with the second link interface 210 on the computer apparatus 200 to process at least a signal transmitting and to make up a bare bone system. The electronic multimedia device 100 also can connect with the computer apparatus 200 via wireless network system (not indicated in the FIG.) to enable web TV to broadcast on the computer apparatus 200.

The computer apparatus 200 further comprises memory, hard disk, micro-processor, computer component, and etc. (not indicated in the FIG.). And the electronic multimedia device 100 further comprises a CD-ROM driver 110. When the electronic multimedia device 100 and the computer apparatus 200 combine together, the first link interface 120 and the second link interface 210 can transmit various signals mutually; therefore can take the place of general use of PC.

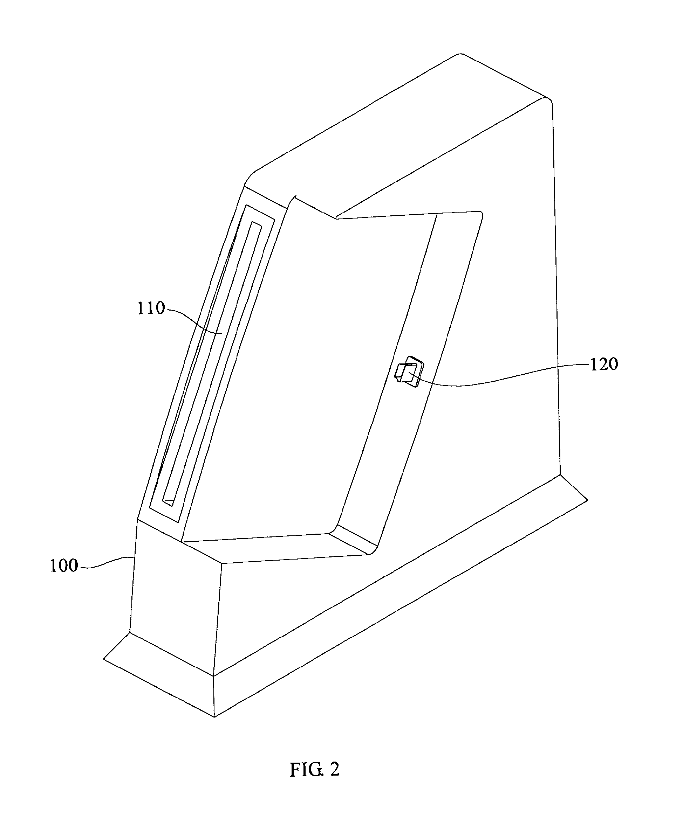

Referring to FIG. 2, is a plan schematic view of an electronic multimedia device in accordance with an embodiment of the present invention. According to the embodiment of the invention, the electronic multimedia device 100 comprises a web TV system (not indicated in the FIG.), a first link interface 120, a CD-ROM driver 110, and a wireless network system (not indicated in the FIG.).

The web TV system (not indicated in the FIG.) is IPTV, abbreviation of Internet Protocol Television, can operate alone to let the users watching online web TV when it accesses Internet. The first link interface 120 can connect to the computer apparatus 200 to make up a bare bone system. The CD-ROM driver 110 can be a slot-loading CD-ROM driver and can be a CD-ROM player or a CD-ROM writer, such as DVD writer and etc... The wireless network system (not indicated in the FIG) can be WiFi or can utilize Bluetooth wireless transmission to transmit signals.

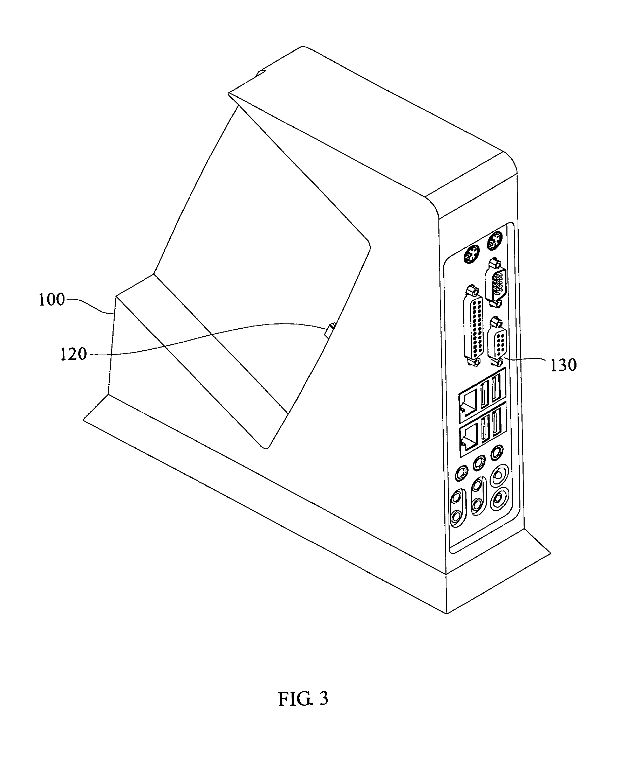

Referring to FIG. 3, is a plan schematic view of a transmitting-interface on the electronic multimedia device in accordance with an embodiment of the present invention. The transmitting-interface 130 is signal ports to image, sound, network, control, transmission, and etc., such as D-sub, S/PDIF, RJ45, PS/2, USB, Cable IN, Cable Out, AV terminal, and etc., which are just for example. The transmitting-interface 130 can connect to personal computer, television, computer screen, keyboard, and mouse. In the electronic multimedia device 100, the first link interface 120, the transmitting-interface 130, the web TV system (not indicated in the FIG.), and the CD-ROM driver 110 have electrical connection for transmitting signals between each other. The web TV system (not indicated in the FIG.) has electrical connection with the transmitting-interface 130. The CD-ROM driver 110 has electrical connection with the web TV (not indicated in the FIG.) and with the transmitting-interface 130.

Referring to FIG. 4, is a plan schematic view of a computer apparatus in accordance with an embodiment of the present invention. In the present invention, the computer apparatus 200 comprises a second link interface 210, a wireless network system (not indicated in the FIG.), a screen 240, and a control interface 230.

The computer apparatus 200 is provided with general computer functions, can administer programs independently, and also can combine with the electronic multimedia device 100 via the second link interface 210 to make up a stander system. The control interface 230 on the computer apparatus 200 is provided with general functions as mouse cursor movement and input. The wireless network system (not indicated in the FIG.) on the computer apparatus 200 can access Internet and also can connect with the electronic multimedia device 100 to watch the web TV.

Besides, the computer apparatus 200 further comprise a webcam 220 and a GPS (not indicated in the FIG.).

Wherein the webcam 220 has the function of image-shooting, also can connect with the electronic multimedia device 100 to access distant supervising. GPS (not indicated in the FIG.) can provide position and navigation.

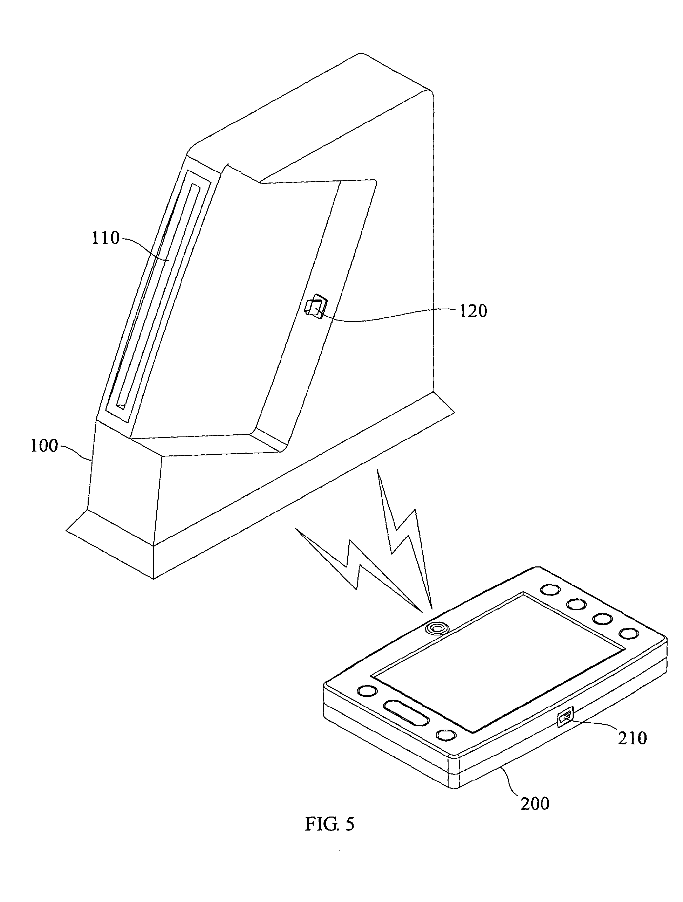

Referring the FIG. 5, is the plan schematic view of division of the separate-able multimedia apparatus in accordance with an embodiment of the present invention. The computer apparatus 200 can separate from electronic multimedia device 100, and can connect with each other via wireless network connection or via wireless Bluetooth transmission. The computer apparatus 200 can receive and watch online web TV anytime via wireless network connection to the electronic multimedia device 100. Besides, when the transmitting-interface 130 connects the electronic multimedia device 100 with a screen (not indicated in the FIG.), the screen (not indicated in the FIG.) also can display images which were shot by the webcam 220 of the computer apparatus 200; If a video camera (not indicated in the FIG.) connects to the transmitting-interface 130, the computer apparatus 200 can watch images shot by the video camera and achieve the effect on distant supervising.

In conclusion, according to the separate-able multimedia apparatus of the present invention, the computer apparatus 200 combines with the electronic multimedia device 100 via the concrete link interfaces to make up a standard system, but when they separate from each other, one is an independent portable computer and the other is an independent web TV device. Moreover, the electronic multimedia device 100 can work independently. The computer apparatus 200 is easier to carry, so as to save the user's cost and increase user's convenience.

While the invention has been described by way of example and in terms of the preferred embodiment, it is to be understood that the invention is not limited to the disclosed embodiments, and it will be obvious that the same may be varied in many ways. Such variations are not to be regarded as a departure from the spirit and scope of the invention, and all such modifications as would be obvious to one skilled in the art are intended to be included within the scope of the following clams.

## Claims

1. A separate-able multimedia apparatus comprising:
an electronic multimedia device comprising a web TV system and a first link interface; and
a computer apparatus, executing at least a computer program, and having a second link interface connecting with the first link interface on the electronic multimedia device to process at least a signal transmission.

2. The separate-able multimedia apparatus according to claim 1 wherein the computer apparatus further comprises a wireless network system.

3. The separate-able multimedia apparatus according to claim 1 wherein the computer apparatus further comprises a screen and a control interface.

4. The separate-able multimedia apparatus according to claim 1 wherein the computer apparatus further comprises at least a webcam.

5. The separate-able multimedia apparatus according to claim 1 wherein the computer apparatus further comprises a GPS.

6. The separate-able multimedia apparatus according to claim 1 wherein system of the web TV is IPTV system.

7. The separate-able multimedia apparatus according to claim 1 wherein the electronic multimedia device comprises a wireless network system.

8. The separate-able multimedia apparatus according to claim 1 wherein the electronic multimedia device further comprises a CD-ROM driver or a CD-ROM writer.

9. The separate-able multimedia apparatus according to claim 1 wherein the electronic multimedia device further comprises a transmitting-interface for transmitting signals to at least an external apparatus mutually.

10. The electronic multimedia device comprising:
a web TV system is provided with function as a web TV; and
a first link interface connecting with the web TV system via electrical connection, and connecting with a computer apparatus for transmitting at least a signal mutually.

11. The electronic multimedia device according to claim 10 wherein the web TV system is the system of IPTV.

12. The electronic multimedia device according to claim 10 wherein further comprises a wireless network system.

13. The electronic multimedia device according to claim 10 wherein comprises a CD-ROM player or a CD-ROM writer.

14. The electronic multimedia device according to claim 10 wherein comprises a transmitting-interface for transmitting signals to at least an external apparatus mutually.
